# EUROPEAN PATENT APPLICATION

(11) **EP 4 837 990 A1**
(43) Date of publication of application: **11.11.2026**
(21) Application number: 26175116.8
(22) Date of filing: 28.04.2026
(51) Int. Cl.: C22C 33/02, B22F 1/065, B22F 9/08, B22F 10/20, B23K 26/342, B33Y 70/00, C22C 38/00, C22C 38/02, C22C 38/04, C22C 38/06, C22C 38/18, C22C 38/34, C22C 38/42, C22C 38/44, C22C 38/46, C22C 38/48, C22C 38/50, C22C 38/52

(54) **FERRITIC STAINLESS STEEL POWDER AND MIXED POWDER**

(30) Priority: 07.05.2025 JP 2025077622; 22.08.2025 JP 2025138696
(71) Applicant: Daido Steel Co., Ltd., Nagoya-shi Aichi 461-8581 (JP)
(72) Inventor: KUMAGAI, Yoshiki, Nagoya-shi, Aichi, 457-8545 (JP); KANEKO, Ryosuke, Nagoya-shi, Aichi, 457-8545 (JP)
(74) Representative: Diehl & Partner

(57) **Abstract**

The present invention relates to a ferritic stainless steel powder, consisting of C ≤ 0.20 mass%, 14.5 mass% ≤ Cr ≤ 32.0 mass%, O ≤ 0.100 mass%, 0.10 mass% ≤ Si ≤ 2.00 mass%, 0.05 mass% ≤ Mn ≤ 1.00 mass%, and optionally at least one of: Cu ≤ 1.00 mass%, Sn ≤ 1.00 mass%, Ni ≤ 1.00 mass%, Ti ≤ 1.00 mass%, Nb ≤ 1.00 mass%, Ta ≤ 1.00 mass%, V ≤ 1.00 mass%, Mo ≤ 5.00 mass%, W ≤ 5.00 mass%, Al ≤ 1.00 mass%, and Co ≤ 1.00 mass%, with the balance being Fe and unavoidable impurities, and having a number ratio N_{0.8} of particles having a circularity e of 0.8 or more being 40% or more, and a brightness L* of a surface of the ferritic stainless steel powder being 55 or more.

## Description

### TECHNICAL FIELD

The present invention relates to a ferritic stainless steel powder and a mixed powder, and more particularly to a ferritic stainless steel powder that is less likely to deteriorate even when stored in a highly humid environment and exhibits excellent workability when applied to additive manufacturing or laser cladding, and a mixed powder containing the ferritic stainless steel powder.

### BACKGROUND ART

The "additive manufacturing method" refers to a method of producing a three-dimensional structure by laminating a thin layer corresponding to a structure obtained by slicing the three-dimensional structure in a horizontal direction by using various methods.

Examples of the known additive manufacturing method using the metal powder, include,
(a) an additive manufacturing method by a powder bed fusion method, and
(b) an additive manufacturing method by a directional energy deposition method.

The "laser cladding" refers to a method in which a powder or a wire that is made of a material of the same type as or a different type from a substrate, is melted with laser light and overlaid on the surface of the substrate.

Various proposals have been made for powders used for such additive manufacturing and laser cladding.

For example, Patent Literature 1 discloses a powder for additive manufacturing that is made of precipitation hardening stainless steel, austenitic stainless steel, or martensitic stainless steel and is produced by using a water atomization method.

The literature describes that both sinterability and flowability of the powder can be achieved by optimizing the particle size distribution, specific surface area, water content of the powder, and average circularity of the particles.

Patent Literature 2 discloses a low-oxygen stainless steel powder obtained by water-atomizing molten steel containing 0.2 to 0.7 mass% of carbon and annealing the sprayed powder at 1120°C in a hydrogen atmosphere.

The same literature describes that
(A) generally, when a stainless steel powder is produced by using a water atomization method, the surface of the powder is easily oxidized in the production process, and
(B) when a water-atomized stainless steel powder containing a predetermined amount of carbon is annealed in a hydrogen atmosphere, a stainless steel powder having a small amount of oxygen is obtained.

Patent Literature 3 discloses a stainless steel powder obtained by water-atomizing a molten metal by using water having a dissolved oxygen content of 2 ppm or less.

The literature describes that when a molten metal is water-atomized by using water containing a small amount of dissolved oxygen, the shape of the powder becomes closer to a spherical shape, and the apparent density of the powder is improved.

Conventionally, austenitic stainless steel powder and martensitic stainless steel powder have been used for additive manufacturing and laser cladding. However, austenitic stainless steel powder is expensive because it contains a large amount of Ni.

On the other hand, martensitic stainless steel powder has a small content of Ni, but generally has poor corrosion resistance. Therefore, when the martensitic stainless steel powder is stored in a highly humid environment, the powder surface is corroded, an increase in oxygen concentration or a decrease in powder flowability occurs, and the martensitic stainless steel powder cannot be applied to additive manufacturing in some cases.

In order to solve this problem, the produced powder may be stored in a low-temperature and low-humidity environment. However, an apparatus used for additive manufacturing or laser cladding is not always installed in a low-temperature and low-humidity environment. Therefore, there is a demand for an inexpensive powder that is less likely to deteriorate even when stored in a highly humid environment.
Patent Literature 1: JP 2024-130667A
Patent Literature 2: JP 2002-508807A
Patent Literature 3: JP H08-246008A

### SUMMARY OF INVENTION

An object of the present invention is to provide a ferritic stainless steel powder that is less likely to deteriorate even when stored in a highly humid environment.

Another object of the present invention is to provide a ferritic stainless steel powder which is excellent in workability when applied to additive manufacturing or laser cladding, and which is capable of producing an additively manufactured body with few defects.

Another object of the present invention is to provide a mixed powder containing such a ferritic stainless steel powder.

In order to achieve the objects, a ferritic stainless steel powder of the present invention consists of:
C ≤ 0.20 mass%,
14.5 mass% ≤ Cr ≤ 32.0 mass%,
O ≤ 0.100 mass%,
0.10 mass% ≤ Si ≤ 2.00 mass%,
0.05 mass% ≤ Mn ≤ 1.00 mass%,
optionally at least one of:
   Cu ≤ 1.00 mass%,
   Sn ≤ 1.00 mass%,
   Ni ≤ 1.00 mass%,
   Ti ≤ 1.00 mass%,
   Nb ≤ 1.00 mass%,
   Ta ≤ 1.00 mass%,
   V ≤ 1.00 mass%,
   Mo ≤ 5.00 mass%,
   W ≤ 5.00 mass%,
   Al ≤ 1.00 mass%, and
   Co ≤ 1.00 mass%,
   with the balance being Fe and unavoidable impurities, and has:
      a number ratio N_{0.8} of particles having a circularity e of 0.8 or more being 40% or more, and
      a brightness L* of a surface of the ferritic stainless steel powder being 55 or more.

The ferritic stainless steel powder may satisfy:$C \leq 0.05 mass % .$

The ferritic stainless steel powder may satisfy:$O \leq 0.043 mass % .$

The ferritic stainless steel powder may have a dislocation density in a ferrite phase being 2.0 × 10¹⁵ m⁻² or less.

The ferritic stainless steel powder may have a color difference ΔE*ab being less than 5.

The ferritic stainless steel powder may be used for laser cladding or additive manufacturing by a laser beam method.

A mixed powder of the present invention contains:
the ferritic stainless steel powder of the present invention, and
a metal carbide powder.

When a molten metal containing a large content of Cr is sprayed by using a gas atomization method (particularly, an atmosphere-melting gas atomization method), a ferritic stainless steel powder having a high circularity, an appropriate brightness (an appropriate laser light absorption rate), and a small content of an oxide film on a particle surface is obtained. The obtained powder has a high circularity and thus has excellent flowability. In addition, since the content of Cr is large and the circularity is high, the particle surface is less likely to be corroded even when stored in a highly humid environment.

The term "corrosion" as used herein means that the ferritic stainless steel powder reacts with moisture and oxygen in the environment to form a hydroxide on the particle surface.

Therefore, when such a powder is applied to additive manufacturing or laser cladding, it is possible to suppress a decrease in flowability of the powder due to corrosion of the particle surface and a decrease in workability due to the decrease in flowability. In addition, it is possible to suppress an excessive decrease in brightness of the powder (excessive absorption of laser light) due to corrosion of the particle surface and the generation of defects in the additively manufactured body caused thereby.

### DESCRIPTION OF EMBODIMENTS

Hereinafter, an embodiment of the present invention will be described in detail.

### [1. Ferritic Stainless Steel Powder]

### [1.1. Main Constituent Elements]

A ferritic stainless steel powder according to the present invention (hereinafter, also simply referred to as a "powder") contains the following elements, with the balance being Fe and unavoidable impurities. Types of added elements, component ranges thereof, and reasons for limitation thereof are as follows.

### (1) C ≤ 0.20 mass%:

C contributes to strengthening of grain boundaries and formation of Cr carbides. However, in the case where the content of C is excessive, the content of Cr carbide formed becomes excessive, and the corrosion resistance of the powder may decrease. Therefore, the content of C needs to be 0.20 mass% or less. The content of C is preferably 0.15 mass% or less, further preferably 0.10 mass% or less, and still more preferably 0.05 mass% or less.

The smaller the content of C, the better. However, extreme reduction in the content of C causes an increase in manufacturing cost. Considering the manufacturing cost, the content of C is preferably 0.0001 mass% or more.

### (2) 14.5 mass% ≤ Cr ≤ 32.0 mass%:

Cr is an element effective for improving corrosion resistance of the powder and suppressing deterioration of the powder. In the case where the content of Cr is small, the corrosion resistance of the powder may be impaired. In the case where the content of Cr is small, the ferrite phase becomes unstable, and a martensite structure may be formed. Therefore, the content of Cr needs to be 14.5 mass% or more. The content of Cr is preferably 15.0 mass% or more.

The upper limit of the content of Cr is not particularly limited as long as the powder satisfies the brightness condition described later. However, in the case where the content of Cr is excessive, an embrittlement phase such as σ phase is likely to be generated in the additively manufactured body, which may cause cracking. Therefore, the content of Cr needs to be 32.0 mass% or less. The content of Cr is preferably 30.0 mass% or less, 28.0 mass% or less, 26.0 mass% or less, 24.0 mass% or less, 22.0 mass% or less, or 20.0 mass% or less.

### (3) O ≤ 0.100 mass%:

In the present invention, O is an impurity. In the case where an excessive content of O is mixed in the powder production process, the thickness of the oxide film on the particle surface layer may increase as a result, and the brightness L* of the powder may decrease. In the case where the brightness L* of the powder is excessively decreased, the absorption rate of the laser light is excessively increased. When such a powder is applied to additive manufacturing of the laser powder bed fusion (L-BPF) system, the temperature of the powder excessively rises. As a result, the generation of metal vapor (fume) and spatter is promoted, which may lead to an increase in shaping defects. Therefore, the content of O needs to be 0.100 mass% or less. The content of O is preferably 0.043 mass% or less, further preferably 0.030 mass% or less, and still more preferably 0.025 mass% or less.

The smaller the content of O, the better. However, extreme reduction in the content of O causes an increase in manufacturing cost. Considering the manufacturing cost, the content of O is preferably 0.0001 mass% or more.

### (4) 0.10 mass% ≤ Si ≤ 2.00 mass%:

Si is an element that acts as a deoxidizing agent. In addition, a small content of Si has an effect of improving the corrosion resistance of the powder. In order to achieve such effects, the content of Si needs to be 0.10 mass% or more.

On the other hand, if the content of Si is excessive, when an additively manufactured body is produced by using such a powder, the toughness of the additively manufactured body decreases, and cracking is likely to occur. Therefore, the content of Si needs to be 2.00 mass% or less, and preferably 1.20 mass% or less.

### (5) 0.05 mass% ≤ Mn ≤ 1.00 mass%:

Mn is an element that acts as a deoxidizing agent. In order to achieve such effects, the content of Mn needs to be 0.05 mass% or more.

On the other hand, in the case where the content of Mn is excessive, the amount of metal vapor (fume) increases when such powder is irradiated with laser light, which may lead to an increase in shaping defects. Therefore, the content of Mn needs to be 1.00 mass% or less, and preferably 0.60 mass% or less.

### [1.2. Sub Constituent Element]

The ferritic stainless steel powder according to the present invention may further contain at least one of the following Groups A to F in addition to the main constituent elements described above. Types of added elements, component ranges thereof, and reasons for limitation thereof are as follows.

### [Group A: At least one of Cu ≤ 1.00 mass% and Sn ≤ 1.00 mass%]

Both Cu and Sn are elements effective for enhancing the corrosion resistance of the powder.

### (1) Cu ≤ 1.00 mass%:

Cu has an effect of increasing the corrosion resistance of the powder. Therefore, the powder may contain Cu. In order to achieve such an effect, the content of Cu is preferably 0.01 mass % or more.

On the other hand, in the case where the content of Cu is excessive, solidification cracking of the additively manufactured body may occur. Therefore, the content of Cu is preferably 1.00 mass% or less.

### (2) Sn ≤ 1.00 mass%:

Sn has an effect of increasing the corrosion resistance of the powder. Therefore, the powder may contain Sn. In order to achieve such an effect, the content of Sn is preferably 0.05 mass % or more.

On the other hand, in the case where the content of Sn is excessive, solidification cracking of the additively manufactured body may occur. Therefore, the content of Sn is preferably 1.00 mass% or less.

### [Group B: Ni ≤ 1.00 mass%]

Ni is an element effective for enhancing the toughness of the additively manufactured body.

### (3) Ni ≤ 1.00 mass%:

Ni has an effect of improving the toughness of the additively manufactured body. Therefore, the powder may contain Ni. In order to achieve such an effect, the content of Ni is preferably 0.01 mass % or more.

On the other hand, in the case where the content of Ni is excessive, the austenite phase may be stabilized. Therefore, the content of Ni is preferably 1.00 mass% or less.

### [Group C: At least one of Ti ≤ 1.00 mass%, Nb ≤ 1.00 mass%, Ta ≤ 1.00 mass%, and V ≤ 1.00 mass%]

All of Ti, Nb, Ta, and V are elements capable of bonding to C to form a carbide and effective for enhancing the strength of the additively manufactured body.

### (4) Ti ≤ 1.00 mass%, Nb ≤ 1.00 mass%, Ta ≤ 1.00 mass%, V ≤ 1.00 mass%:

All of Ti, Nb, Ta, and V can bond to C to form a carbide and have an effect of increasing the strength of the additively manufactured body. Therefore, the powder may contain at least one element selected from the group consisting of Ti, Nb, Ta, and V. In order to obtain such an effect, the content of any of these elements is preferably 0.01 mass% or more.

On the other hand, in the case where the content of these elements is excessive, coarse carbides are formed, which may cause cracking of the additively manufactured body. Therefore, the content of each of these elements is preferably 1.00 mass% or less.

### [Group D: At least one of Mo ≤ 5.00 mass% and W ≤ 5.00 mass%]

Both Mo and W are elements effective in stabilizing the ferrite phase and the solid-solution strengthening of the additively manufactured body.
(5) Mo ≤ 5.00 mass%, W ≤ 5.00 mass%:

Both Mo and W have an action of stabilizing the ferrite phase and an action of solid-solution strengthening the powder and the additively manufactured body thereof. Therefore, the powder may contain Mo and/or W. In order to achieve such effects, any of these elements is preferably 0.01 mass % or more.

On the other hand, in the case where the content of these elements is excessive, an embrittlement phase such as σ phase may be formed in the additively manufactured body. Therefore, the content of each of these elements is preferably 5.00 mass% or less.

### [Group E: Al ≤ 1.00 mass%]

Al is an element effective for increasing the corrosion resistance of the powder, similarly to the elements of Group A.

### (6) Al ≤ 1.00 mass%:

Al has an effect of increasing the corrosion resistance of the powder. Therefore, the powder may contain Al. In order to achieve such an effect, the content of Al is preferably 0.01 mass% or more.

On the other hand, in the case where the content of Al is excessive, the Al reacts with O or N as an impurity to form an oxide or a nitride, which may cause cracking of the additively manufactured body. Therefore, the content of Al is preferably 1.00 mass% or less. The content of Al is more preferably 0.50 mass% or less.

### [Group F: Co ≤ 1.00 mass%]

Co is an element effective for increasing the strength of the additively manufactured body.

### (7) Co ≤ 1.00 mass%:

Co has an effect of increasing the strength of the additively manufactured body. Therefore, the powder may contain Co. In order to achieve such an effect, the content of Co is preferably 0.01 mass % or more.

On the other hand, in the case where the content of Co is excessive, the austenite phase may be stabilized. Therefore, the content of Co is preferably 1.00 mass% or less.

### [1.3. Unavoidable Impurities]

The "unavoidable impurities" are components mixed due to various factors such as a raw material and a production process when the ferritic stainless steel powder according to the present invention is industrially produced, and the content thereof is within a range that does not adversely influence the properties of the powder.

In the case where the powder according to the present invention contains the following elements in the following contents, these elements are treated as unavoidable impurities.

H ≤ 0.05 mass%, N ≤ 0.08 mass%, P ≤ 0.05 mass%, S ≤ 0.05 mass%, Cu < 0.01 mass%, Te ≤ 0.05 mass%, As ≤ 0.05 mass%, Sn ≤ 0.05 mass%, Sb ≤ 0.05 mass%, Se ≤ 0.05 mass%, Pb ≤ 0.05 mass%, Bi ≤ 0.05 mass%, Zn ≤ 0.05 mass%, Hg ≤ 0.05 mass%, Mg ≤ 0.05 mass%, Ca ≤ 0.05 mass%, Hf ≤ 0.05 mass%, Zr ≤ 0.05 mass%, B ≤ 0.05 mass%, and REM ≤ 0.05 mass%.

### [1.3. Properties]

### [1.3.1 Circularity]

The "circularity e" refers to a value represented by the following equation (1). $e = 4 πS / {L}^{2}$ (1) in which
S is a projected area of an image (particle image) obtained by projecting a particle onto a two-dimensional plane, and
L is a perimeter of the particle image.

In the case where the particle image is a perfect circle, the circularity e is 1.0.

### The "number ratio N_{0.8} of particles having a circularity of 0.8 or more" refers to a ratio of the number of particles having a circularity of 0.8 or more to the total number of particles.

The "number ratio N_{0.9} of particles having a circularity of 0.9 or more" refers to a ratio of the number of particles having a circularity of 0.9 or more to the total number of particles.

The total number of particles to be observed is not particularly limited, but the total number is preferably 10000 or more in order to reduce the measurement error.

The circularity of the particles affects the absorption rate of laser light and the amount of moisture adsorbed to the particle surface. In the case where the circularity of the particles is low, the laser light is excessively absorbed when such powder is irradiated with the laser light, which may lead to an increase in shaping defects. In addition, in the case where the circularity of the particle is low, a large amount of moisture is adsorbed on the particle surface, and corrosion of the particle may be promoted. When the particles are corroded, the flowability of the powder may decrease.

Therefore, the larger the number ratio of particles having high circularity, the better.

In order to suppress an increase in shaping defects and to increase the flowability of the powder, the number ratio N_{0.8} of particles having a circularity of 0.8 or more is preferably 40% or more. The number ratio N_{0.8} is more preferably 50% or more, further preferably 60% or more, and still further preferably 70% or more.

Similarly, in order to suppress an increase in shaping defects and to increase the flowability of the powder, the number ratio N_{0.9} of particles having a circularity of 0.9 or more is preferably 40% or more. The number ratio N_{0.9} is more preferably 50% or more, further preferably 60% or more, and still further preferably 70% or more.

### [1.3.2 Brightness L*]

The "brightness L*" is a measure of brightness of the surface of the ferritic stainless steel powder, and refers to a value measured by using a colorimeter.

The brightness of the powder surface is correlated with the absorption rate of laser light. Generally, as the brightness of the powder surface decreases, the absorption rate of laser light increases. Therefore, in the case where the brightness L* of the powder is too small, the temperature of the powder excessively rises when such a powder is applied to additive manufacturing of the L-BPF method. As a result, the generation of metal vapor (fume) and spatter is promoted, which may lead to an increase in shaping defects. Therefore, the brightness L* needs to be 55 or more.

On the other hand, the upper limit of the brightness L* is not particularly limited. However, in the case where the brightness L* becomes too large, the absorption rate of the laser light becomes excessively small. As a result, when applied to additive manufacturing of the L-PBF method, un-melted powder increases, which may lead to a shaping defect. Therefore, the brightness L* is preferably 70 or less.

### [1.3.3 Color Difference ΔE*ab]

The "color difference ΔE*ab" refers to a color difference on the powder surface measured by using a colorimeter before and after the ferritic stainless steel powder is held in a thermo-hygrostat at a temperature of 40°C and a humidity of 80% RH for 96 hours.

Since the ferritic stainless steel powder according to the present invention has optimized components and particle shapes, the particle surface is less likely to be corroded even when stored in a highly humid environment for a long time. Therefore, the color difference of the powder is small before and after storage under a highly humid environment. In the case where the manufacturing conditions are optimized, the color difference ΔE*ab is less than 5. In the case where the manufacturing conditions are further optimized, the color difference ΔE*ab is 3 or less.

### [1.3.4 Dislocation Density]

The "dislocation density in the ferrite phase" refers to a value calculated based on an X-ray diffraction profile using CoKα rays of the ferritic stainless steel powder.

In the case where there is a dislocation in the ferrite phase, water and oxygen rapidly diffuse toward the dislocation, and the powder is easily corroded. In order to suppress the corrosion of the powder, the lower the dislocation density in the ferrite phase, the better.

The dislocation density of the ferrite phase depends on the composition of the powder and the method for manufacturing the powder. In the case where the composition of the powder and the method for manufacturing the powder are optimized, the dislocation density in the ferrite phase is 2.0 × 10¹⁵ m⁻² or less. In the case where the composition of the powder and the method for manufacturing the powder are further optimized, the dislocation density becomes 5.0 × 10¹⁴ m⁻² or less or 8.0 × 10¹³ m⁻² or less.

### [1.3.5. Average particle size]

The "average particle size d_{50_}SUS (µm) of the ferritic stainless steel powder" refers to a median diameter of the powder in a number-based cumulative particle size distribution measured by using a particle image analyzer.

Generally, as the d₅₀_SUS of the ferritic stainless steel powder decreases, the content of fine powder (particles having a particle size of 10 µm or less) increases. The adhesion force generated between particles, such as van der Waals force and electrostatic force, increases as the particle size decreases. Therefore, in the case where the d_{50_}SUS is too small, the particles tend to aggregate, and the flowability decreases. Therefore, the d_{50_}SUS is preferably 10 µm or more. The d₅₀_SUS is more preferably 20 µm or more, and still more preferably 30 µm or more.

On the other hand, in the case where the d₅₀_SUS becomes too large, the frictional force generated on the powder surface becomes more dominant than the adhesion force generated between the particles. Therefore, the shear resistance at the time of powder flow increases, and the flowability may be inhibited. Therefore, the d₅₀_SUS is preferably 70 µm or less. The d₅₀_SUS is more preferably 60 µm or less.

### [1.4. Application]

The ferritic stainless steel powder according to the present invention can be used in various applications. The ferritic stainless steel powder according to the present invention is suitable as a powder used for laser cladding or additive manufacturing by a laser beam method because the flowability is less likely to decrease even when stored in a highly humid environment.

### [2. Mixed Powder]

The mixed powder according to the present invention includes
the ferritic stainless steel powder according to the present invention and
a metal carbide powder.

### [2.1. Ferritic Stainless Steel Powder]

Details of the ferritic stainless steel powder according to the present invention are as described above, and the description thereof is omitted.

### [2.2 Metal Carbide Powder]

### [2.2.1. Composition]

The ferritic stainless steel powder according to the present invention can be used alone for laser cladding or additive manufacturing. However, when laser cladding or additive manufacturing is performed by using only the ferritic stainless steel powder, the hardness of the additively manufactured body may be insufficient.

In such a case, it is preferable to add a metal carbide powder to the ferritic stainless steel powder to obtain a mixed powder and perform laser cladding or additive manufacturing by using the mixed powder.

The type of the metal carbide powder is not particularly limited, and an optimum material can be selected according to the purpose. Examples of the metal carbide powder include TiC powder, WC powder, and Cr₇C₃ powder. The mixed powder may contain any one of these metal carbide powders, or may contain two or more thereof.

### [2.2.2 Content]

The "content of the metal carbide powder" refers to the ratio of the mass of the metal carbide powder to the total mass of the mixed powder.

Generally, as the content of the metal carbide powder increases, the hardness of the additively manufactured body increases. In order to obtain such an effect, the content of the metal carbide is preferably 5 mass% or more. The content is more preferably 10 mass% or more, and more preferably 15 mass% or more.

On the other hand, in the case where the content of the metal carbide powder is excessive, defects may occur in the additively manufactured body or the toughness of the additively manufactured body may decrease. Therefore, the content of the metal carbide powder is preferably 30 mass% or less. The content is more preferably 25 mass% or less, and further preferably 22 mass% or less.

### [2.2.3 Average particle size]

The "average particle size d_{50_}MC of the metal carbide powder" refers to a median diameter of the powder in a number-based cumulative particle size distribution measured by using a particle image analyzer.

In the case where the average particle size d_{50_}MC of the metal carbide powder is too small, the particles tend to aggregate, and the flowability may decrease. Therefore, the d_{50_}MC is preferably 0.5 µm or more.

On the other hand, in the case where the d_{50_}MC is too large, the shear resistance at the time of powder flow increases, and the flowability may be impaired. Therefore, the d_{50_}MC is preferably 15 µm or less.

### [3. Method for Manufacturing Ferritic Stainless Steel Powder]

The ferritic stainless steel powder according to the present invention can be produced by
melting raw materials blended to have predetermined components, and
atomizing the molten metal.

### [3.1. Production of Molten Metal]

First, raw materials blended to have predetermined components are melted to obtain a molten metal. A method of melting the raw materials is not particularly limited, and an optimum method can be selected according to a purpose thereof.

The method of melting the raw materials is roughly classified into
(a) an air-melting method of melting the raw materials in the air, and
(b) an atmosphere-melting method of melting the raw materials in an inert gas atmosphere such as N₂ or Ar.

In order to produce a powder having a small amount of oxygen, the atmosphere-melting method is preferably used.

### [3.2. Atomization of Molten Metal]

Next, the molten metal is atomized. The atomization method is roughly classified into
(a) a water atomization method of spraying water to the molten metal, and
(b) a gas atomization method of spraying an inert gas to the molten metal.

In order to obtain a powder having a high circularity, the gas atomization method is preferably used.

Since the atomization method is a method of quenching and solidifying the molten metal, dislocations are easily introduced into the ferrite phase. In order to obtain a powder having a low dislocation density, it is preferable to provide a heater in a chamber in which the atomized powder is accommodated and slowly cool the powder. Alternatively, the atomized powder may be annealed at a predetermined temperature. When the powder is slowly cooled or annealed, dislocations disappear, and a powder having a low dislocation density is obtained.

In the case where slow cooling is performed, the average cooling rate (slow cooling rate) in the temperature range of 600°C to 300°C is preferably 200°C/hour or less. The slow cooling rate is more preferably 100°C/hour or less.

In the case where annealing is performed, annealing is preferably performed at 500°C to 700°C for 1 minute to 10 hours in a vacuum or an inert gas atmosphere so that the powder is not oxidized. For example, annealing is preferably performed at around 600°C for around 30 minutes. The annealing conditions are more preferably around 600°C for around 1 hour.

### [4. Effects]

When a molten metal containing a large content of Cr is sprayed by using a gas atomization method (particularly, an atmosphere-melting gas atomization method), a ferritic stainless steel powder having a high circularity, an appropriate brightness (an appropriate laser light absorption rate), and a small content of an oxide film on a particle surface can be obtained. The obtained powder has a high circularity and thus has excellent flowability. In addition, since the content of Cr is large and the circularity is high, the particle surface is less likely to be corroded even when stored in a highly humid environment.

Therefore, when such a powder is applied to additive manufacturing or laser cladding, it is possible to suppress a decrease in flowability of the powder due to corrosion of the particle surface and a decrease in workability due to the decrease in flowability. In addition, it is possible to suppress an excessive decrease in brightness of the powder (excessive absorption of laser light) due to corrosion of the particle surface and the generation of defects in the additively manufactured body caused thereby.

### EXAMPLES

### (Examples 1 to 21 and Comparative Examples 1 to 4)

### [1. Preparation of Samples]

By using an atomization method, 25 types of powders shown in Table 1 were produced. In Example 1 to 21 and Comparative Example 1-3, powders were produced by using an atmosphere-melting gas atomization method. On the other hand, in Comparative Example 4, a powder was produced using an atmospheric air-melting water atomization method. In Table 1, "-" indicates that the content of the element is equal to or less than the detection limit.

Further, by using the obtained powder, an additively manufactured body having a cubic shape of 10 mm × 10 mm × 10 mm was produced. A metal 3D printer M2, manufactured by Concept Laser, was used for additive manufacturing. The laser irradiation conditions are as follows.
Laser output: 400 W
Laser scanning speed: 450 mm/s
Hatching width: 0.13 mm
Lamination thickness: 50 µm
Laser spot diameter: 180 µm
Process gas during fabrication: argon

**[Table 1]**

| No. | Components (mass%) | | | | | | | | | |
|---|---|---|---|---|---|---|---|---|---|---|
| | C | Si | Mn | P | S | Cu | Ni | Cr | Mo | W |
| Ex. 1 | 0.02 | 0.80 | 0.11 | 0.02 | 0.02 | 0.1 | 0.3 | 17.1 | 0.1 | - |
| Ex. 2 | 0.003 | 0.80 | 0.22 | 0.03 | 0.005 | 0.4 | 0.1 | 18.0 | 0.2 | - |
| Ex. 3 | 0.01 | 0.90 | 0.44 | 0.02 | 0.005 | 0.2 | 0.05 | 17.1 | 1.1 | 0.02 |
| Ex. 4 | 0.03 | 0.50 | 0.31 | 0.04 | 0.01 | 0.2 | 0.2 | 18.5 | 0.1 | - |
| Ex. 5 | 0.01 | 0.60 | 0.38 | 0.03 | 0.01 | 0.6 | 0.03 | 19.5 | 0.2 | - |
| Ex. 6 | 0.002 | 0.50 | 0.20 | 0.002 | 0.004 | 0.02 | 0.03 | 17.5 | 2.2 | 0.04 |
| Ex. 7 | 0.02 | 1.20 | 0.07 | 0.01 | 0.03 | 0.05 | 0.1 | 15.2 | 0.2 | - |
| Ex. 8 | 0.03 | 0.50 | 0.11 | 0.02 | 0.01 | 0.07 | 0.05 | 22.0 | 0.2 | - |
| Ex. 9 | 0.01 | 0.70 | 0.10 | 0.02 | 0.01 | 0.1 | 0.12 | 17.4 | 0.1 | - |
| Ex. 10 | 0.05 | 0.75 | 0.18 | 0.03 | 0.005 | 0.4 | 0.1 | 17.5 | 0.2 | - |
| Ex. 11 | 0.12 | 0.75 | 0.12 | 0.02 | 0.01 | 0.2 | 0.2 | 17.3 | 0.1 | - |
| Ex. 12 | 0.04 | 0.65 | 0.22 | 0.02 | 0.006 | 0.2 | 0.1 | 19.2 | 0.2 | - |
| Ex. 13 | 0.11 | 0.75 | 0.23 | 0.03 | 0.005 | 0.4 | 0.1 | 17.3 | 0.2 | - |
| Ex. 14 | 0.01 | 0.20 | 0.08 | 0.02 | 0.01 | 0.1 | 0.2 | 31.5 | 1.7 | - |
| Ex. 15 | 0.007 | 0.65 | 0.07 | 0.01 | 0.005 | - | - | 17.5 | - | - |
| Ex. 16 | 0.04 | 0.40 | 0.07 | 0.01 | 0.01 | 0.05 | 0.1 | 18.9 | 0.1 | - |
| Ex. 17 | 0.03 | 0.42 | 0.12 | 0.03 | 0.005 | 0.1 | 0.2 | 18.8 | 0.2 | 2.7 |
| Ex. 18 | 0.02 | 0.62 | 0.14 | 0.01 | 0.02 | 0.05 | 0.1 | 14.6 | 0.08 | - |
| Ex. 19 | 0.02 | 0.35 | 0.14 | 0.01 | 0.008 | 0.2 | 0.2 | 15.3 | 0.1 | - |
| Ex. 20 | 0.02 | 0.78 | 0.12 | 0.03 | 0.02 | 0.1 | 0.1 | 20.5 | 1.5 | 0.05 |
| Ex. 21 | 0.01 | 0.45 | 0.14 | 0.02 | 0.02 | 0.3 | 0.1 | 21.5 | 0.3 | - |
| Comp. Ex. 1 | 0.12 | 0.80 | 0.08 | 0.04 | 0.01 | 0.1 | 0.15 | 12.2 | 0.08 | - |
| Comp. Ex. 2 | 0.04 | 0.60 | 0.22 | 0.02 | 0.03 | 0.1 | 0.4 | 13.0 | 0.3 | - |
| Comp. Ex.3 | 0.03 | 0.80 | 0.23 | 0.04 | 0.02 | 0.2 | 0.3 | 16.2 | 0.2 | - |
| Comp. Ex. 4 | 0.05 | 0.50 | 0.11 | 0.02 | 0.01 | 0.2 | 0.3 | 14.5 | 0.3 | - |

**[Table 1 (Continued)]**

| No. | Components (mass%) | | | | | | | | | |
|---|---|---|---|---|---|---|---|---|---|---|
| | Al | Ti | Nb | Ta | V | Co | Sn | O | N | Fe |
| Ex. 1 | - | - | - | - | - | - | - | 0.043 | 0.03 | bal. |
| Ex. 2 | - | - | - | - | 0.01 | - | - | 0.050 | 0.01 | bal. |
| Ex. 3 | - | - | 0.4 | 0.06 | - | 0.01 | - | 0.058 | 0.02 | bal. |
| Ex. 4 | 0.02 | 0.8 | 0.02 | - | - | - | - | 0.030 | 0.04 | bal. |
| Ex. 5 | 0.01 | - | - | - | - | 0.01 | - | 0.029 | 0.02 | bal. |
| Ex. 6 | - | - | 0.01 | - | - | - | - | 0.041 | 0.04 | bal. |
| Ex. 7 | - | - | - | - | 0.02 | - | - | 0.070 | 0.01 | bal. |
| Ex. 8 | - | - | - | - | 0.01 | - | - | 0.048 | 0.04 | bal. |
| Ex. 9 | - | - | - | - | - | - | - | 0.024 | 0.02 | bal. |
| Ex. 10 | - | 0.01 | - | - | - | - | - | 0.051 | 0.01 | bal. |
| Ex. 11 | - | - | - | - | - | - | - | 0.023 | 0.03 | bal. |
| Ex. 12 | - | - | - | - | - | - | - | 0.042 | 0.01 | bal. |
| Ex. 13 | - | - | - | - | - | - | - | 0.040 | 0.01 | bal. |
| Ex. 14 | - | 0.02 | 0.03 | - | 0.01 | - | - | 0.030 | 0.02 | bal. |
| Ex. 15 | - | - | - | - | - | - | - | 0.045 | 0.03 | bal. |
| Ex. 16 | - | - | - | - | 0.7 | - | - | 0.034 | 0.01 | bal. |
| Ex. 17 | - | - | - | - | - | 0.05 | - | 0.048 | 0.03 | bal. |
| Ex. 18 | - | - | - | - | - | - | 0.51 | 0.032 | 0.02 | bal. |
| Ex. 19 | - | - | - | - | - | - | 0.22 | 0.028 | 0.02 | bal. |
| Ex. 20 | 0.49 | - | 0.7 | - | - | - | 0.15 | 0.035 | 0.02 | bal. |
| Ex. 21 | - | - | - | - | - | - | 0.08 | 0.042 | 0.03 | bal. |
| Comp. Ex. 1 | - | - | - | - | - | - | - | 0.052 | 0.02 | bal. |
| Comp. Ex. 2 | - | - | - | - | - | - | - | 0.202 | 0.01 | bal. |
| Comp. Ex.3 | - | - | - | - | - | - | - | 0.120 | 0.03 | bal. |
| Comp. Ex. 4 | - | - | - | - | - | - | - | 0.048 | 0.03 | bal. |

### [2. Test Method]

### [2.1 Evaluation of Powder]

### [2.1.1 Brightness L*]

The brightness L* of the powder immediately after the production was measured by using a colorimeter. As the colorimeter, CR-5, manufactured by Konica Minolta Japan, Inc., was used. The measurement conditions are as follows.
Measurement method: SCE method (specular reflection light removal)
Observation conditions: 10° fields of view
Observation light source: D65
Measurement type: Petri dish measurement
Measurement diameter: φ30 mm
Calibration: white calibration and zero calibration

### [2.1.2 Circularity]

The shape of the powder immediately after the production was evaluated by using an image particle size distribution analyzer (Morphologi G3, manufactured by Malvern Panalytical). Among the measurement particles, 10000 particles were randomly selected, and the circularity of each particle was calculated. Furthermore, the number ratio N_{0.8} of particles having a circularity of 0.8 or more was calculated by using the circularity of each particle.

### [2.1.3 Dislocation Density]

The dislocation density in the ferrite phase contained in the powder immediately after the production was measured as follows.

The powder immediately after the production was filled in an X-ray analysis holder, and X-ray diffraction measurement (θ-2θ measurement) was performed to obtain a line profile of diffraction peaks from each orientation plane of (110), (200), (211), and (220), which are main orientations of the ferrite phase. In the X-ray diffraction measurement, the radiation source was CoKα rays. From the obtained line profile, the dislocation density of the powder was determined by using a direct-fitting/modified Williamson-Hall (DF/mWH) method. The dislocation density was calculated by using the following formula (2).

The dislocation density $ρ = {φ}^{2} / \left({πA}^{2}{b}^{2}\right) \left({m}^{- 2}\right)$ (2)

Here,
φ is a value obtained from the obtained line profile by using the DF/mWH method.
A is a constant, and 0.5 was substituted.
b is the Burgers vector of dislocation, and 0.248 [nm] was substituted.
Details of the DF/mWH method are described in Reference Literature 1.

[Reference Literature 1] S. Takaki, T. Masumura, T. Tsuchiyama, "Dislocation Characterization by the Direct-fitting/modified Williamson-Hall (DF/mWH) Method in Cold Worked Ferritic Steel", ISIJ International, vol. 59, no. 3, pp. 567-572, 2019

### [2.1.4 Median Diameter d_{50_}SUS]

The d_{50_}SUS of the powder was measured by using an image particle size distribution analyzer (Morphologi G3, manufactured by Malvern Panalytical).

### [2.1.5 Color Difference ΔE*ab]

Into a bag made of a nonwoven fabric having good air permeability was put 10 g of the powder immediately after the production. The bag was held in a thermo-hygrostat at a temperature of 40°C and a humidity of 80% RH for 96 hours.

The powder before and after being held in the thermo-hygrostat was filled in a holder of a colorimeter, and the L* value, the a* value, and the b* value in the L*a*b* color space were measured. As the colorimeter, CR-5, manufactured by Konica Minolta Japan, Inc., was used. The measurement conditions are as follows.
Measurement method: SCE method (specular reflection light removal)
Observation conditions: 10° fields of view
Observation light source: D65
Measurement type: Petri dish measurement
Measurement diameter: φ30 mm
Calibration: white calibration and zero calibration

The color difference ΔE*ab was calculated by using the obtained measured values. The following equation was used to calculate ΔE*ab. $ΔE * ab = {\left\{{\left({{L}_{1}}^{∗}-{{L}_{2}}^{∗}\right)}^{2}+{\left({{a}_{1}}^{∗}-{{a}_{2}}^{∗}\right)}^{2}+{\left({{b}_{1}}^{∗}-{{b}_{2}}^{∗}\right)}^{2}\right\}}^{1 / 2}$ in which
ΔE*ab is a color difference between the powder before storage and the powder after storage,
L₁*, a₁*, and b₁* are L*, a*, and b* of the powder before storage, respectively, and
L₂*, a₂*, and b₂* are L*, a*, and b* of the powder after storage, respectively.

### [2.2 Evaluation of Internal Defect of Additively Manufactured Body]

The additively manufactured body was cut parallel to the lamination direction, and the cut surface was mirror-polished. Next, the metallographic structure of the cut surface was photographed by using an optical microscope. Further, binarization processing of the captured images was performed by using an image processing software ImageJ, and the area ratio of internal defects was calculated. The visual field area was 45 mm².

### [3. Results]

Results are shown in Table 2. The followings can be understood from Table 2.

Regarding the dislocation density, "≤A" indicates that the dislocation density in the ferrite phase was 2.0 × 10¹⁵ m⁻² or less, and ">A" indicates that the dislocation density in the ferrite phase was more than 2.0 × 10¹⁵ m⁻².

Regarding the amount of internal defects, "good" indicates that the area ratio of defects was 1% or less, and "poor" indicates that the area ratio of defects exceeded 1%.

As for the color difference, "good" indicates that ΔE*ab was 2 or less, "fair" indicates that ΔE*ab was more than 2 and less than 5, and "poor" indicates that ΔE*ab was 5 or more.

Regarding the determination, "good" indicates that the color difference was good and the internal defect was good (i.e., comprehensively "pass"), "fair" indicates that the color difference was fair and the internal defect was good (i.e., comprehensively "pass"), and "poor" indicates that at least one of the color difference and the internal defect was poor (i.e., comprehensively "fail").
(1) In Comparative Example 1, the color difference ΔE*ab was 5 or more. This is considered to be because the corrosion of the powder surface was promoted due to the small content of Cr.
(2) In Comparative Example 2, the color difference ΔE*ab was 5 or more, the brightness L* was low, and the amount of internal defect of the additively manufactured body exceeded 1%. This is considered to be because the content of Cr was small and the content of O was excessive.
(3) In Comparative Example 3, the brightness L* was low, and the amount of internal defect of the additively manufactured body exceeded 1%. The reason is considered to be that the content of O was excessive.
(4) In Comparative Example 4, although the composition was appropriate, the ratio of particles having a circularity of 0.8 or more was less than 40%. In Comparative Example 4, the color difference ΔE*ab was slightly high. This is because a water atomization method was used as a method for manufacturing the powder.
(5) In Example 1 to 21, the brightness L* was 55 or more, and the ratio of particles having a circularity of 0.8 or more was 40% or more.
(6) In Example 11, the color difference ΔE*ab was slightly high. This is considered to be because the content of C in the powder was slightly large, and thus the content of Cr carbide formed in the powder was large, and corrosion of the powder surface was slightly promoted.
(7) In Example 12, the dislocation density was slightly high. It is considered that this is because the atomized powder was not appropriately slowly cooled, and dislocations were not sufficiently eliminated.
(8) In Example 13, the dislocation density was slightly high, and the color difference ΔE*ab was slightly high. It is considered that the reason why the dislocation density was slightly increased is that the atomized powder was not appropriately slowly cooled, and dislocations were not sufficiently eliminated. It is considered that the reason why the color difference ΔE*ab was slightly increased is that the dislocation density was slightly increased, and further, since the content of C in the powder was slightly large, the content of Cr carbide formed in the powder was increased, and corrosion of the powder surface was slightly promoted.

**[Table 2]**

| No. | Brightness L* | N_{0.8} (%) | Dislocation density (m⁻²) | d50_SUS (µm) |
|---|---|---|---|---|
| Ex. 1 | 58.3 | 52 | ≤A | 28 |
| Ex. 2 | 57.4 | 51 | ≤A | 45 |
| Ex. 3 | 59.1 | 48 | ≤A | 41 |
| Ex. 4 | 61.3 | 52 | ≤A | 35 |
| Ex. 5 | 60.2 | 55 | ≤A | 38 |
| Ex. 6 | 59.2 | 56 | ≤A | 38 |
| Ex. 7 | 58.2 | 54 | ≤A | 43 |
| Ex. 8 | 62.5 | 54 | ≤A | 45 |
| Ex. 9 | 64.4 | 65 | ≤A | 63 |
| Ex. 10 | 56.4 | 53 | ≤A | 36 |
| Ex. 11 | 57.4 | 52 | ≤A | 38 |
| Ex. 12 | 61.2 | 64 | >A | 36 |
| Ex. 13 | 56.4 | 53 | >A | 36 |
| Ex. 14 | 62.5 | 53 | ≤A | 39 |
| Ex. 15 | 59.3 | 55 | ≤A | 44 |
| Ex. 16 | 57.5 | 56 | ≤A | 45 |
| Ex. 17 | 58.3 | 63 | ≤A | 36 |
| Ex. 18 | 56.3 | 51 | ≤A | 43 |
| Ex. 19 | 56.5 | 52 | ≤A | 42 |
| Ex. 20 | 57.2 | 56 | ≤A | 38 |
| Ex. 21 | 61.2 | 54 | ≤A | 45 |
| Comp. Ex. 1 | 56.3 | 45 | ≤A | 36 |
| Comp. Ex. 2 | 50.3 | 52 | ≤A | 38 |
| Comp. Ex. 3 | 53.5 | 53 | ≤A | 37 |
| Comp. Ex. 4 | 54.0 | 35 | ≤A | 25 |

**[Table 2 (Continued)]**

| No. | ΔE*ab | Area ratio of internal defects (%) | Determination |
|---|---|---|---|
| Ex. 1 | good | good | good |
| Ex. 2 | good | good | good |
| Ex. 3 | good | good | good |
| Ex. 4 | good | good | good |
| Ex. 5 | good | good | good |
| Ex. 6 | good | good | good |
| Ex. 7 | good | good | good |
| Ex. 8 | good | good | good |
| Ex. 9 | good | good | good |
| Ex. 10 | good | good | good |
| Ex. 11 | fair | good | fair |
| Ex. 12 | good | good | good |
| Ex. 13 | fair | good | fair |
| Ex. 14 | good | good | good |
| Ex. 15 | good | good | good |
| Ex. 16 | good | good | good |
| Ex. 17 | good | good | good |
| Ex. 18 | good | good | good |
| Ex. 19 | good | good | good |
| Ex. 20 | good | good | good |
| Ex. 21 | good | good | good |
| Comp. Ex. 1 | poor | good | poor |
| Comp. Ex. 2 | poor | poor | poor |
| Comp. Ex. 3 | good | poor | poor |
| Comp. Ex. 4 | fair | poor | poor |

Although the embodiments of the present invention have been described in detail above, the present invention is not limited to the above embodiments, and various modifications can be made without departing from the gist of the present invention.

The present application is based on Japanese Patent Application No. 2025-077622 filed on May 7, 2025 and Japanese Patent Application No. 2025-138696 filed on August 22, 2025, the contents thereof being hereby incorporated by reference.

### INDUSTRIAL APPLICABILITY

The ferritic stainless steel powder according to the present invention can be used as a powder raw material for producing parts (for example, a heat exchanger, a boiler tube, and tableware) requiring corrosion resistance by using an additive manufacturing method.

## Claims

1. A ferritic stainless steel powder,
consisting of:
C ≤ 0.20 mass%,
14.5 mass% ≤ Cr ≤ 32.0 mass%,
O ≤ 0.100 mass%,
0.10 mass% ≤ Si ≤ 2.00 mass%,
0.05 mass% ≤ Mn ≤ 1.00 mass%, and
optionally at least one of:
Cu ≤ 1.00 mass%,
Sn ≤ 1.00 mass%,
Ni ≤ 1.00 mass%,
Ti ≤ 1.00 mass%,
Nb ≤ 1.00 mass%,
Ta ≤ 1.00 mass%,
V ≤ 1.00 mass%,
Mo ≤ 5.00 mass%,
W ≤ 5.00 mass%,
Al ≤ 1.00 mass%, and
Co ≤ 1.00 mass%,
with the balance being Fe and unavoidable impurities, and having:
a number ratio N_{0.8} of particles having a circularity e of 0.8 or more being 40% or more, and
a brightness L* of a surface of the ferritic stainless steel powder being 55 or more,
in which,
the circularity e refers to a value represented by the following equation (1), and
the number ratio N_{0.8} of particles having a circularity of 0.8 or more refers to a ratio of the number of particles having the circularity e of 0.8 or more to the total number of particles:$e = 4 π {S / L}^{2}$ (1) in which
S is a projected area of a particle image obtained by projecting a particle onto a two-dimensional plane, and
L is a perimeter of the particle image,
the circularity e, number ratio N_{0.8}, and the brightness L* are measured by the methods described in the present specification.

2. The ferritic stainless steel powder according to claim 1, satisfying:$C \leq 0.05 mass % .$

3. The ferritic stainless steel powder according to claim 1 or 2, satisfying: $O \leq 0.043 mass % .$

4. The ferritic stainless steel powder according to any one of claims 1 to 3, having a dislocation density in a ferrite phase being 2.0 × 10¹⁵ m⁻² or less, in which
the dislocation density refers to a value calculated based on an X-ray diffraction profile using CoKα rays of the ferritic stainless steel powder and measured by the method described in the present specification.

5. The ferritic stainless steel powder according to any one of claims 1 to 4, having a color difference ΔE*ab being less than 5, in which
the color difference ΔE*ab refers to a color difference on a powder surface measured by using a colorimeter before and after the ferritic stainless steel powder is held in a thermo-hygrostat at a temperature of 40°C and a humidity of 80% RH for 96 hours.

6. The ferritic stainless steel powder according to any one of claims 1 to 5, wherein the content of Cr is 15.0 mass% or more.

7. The ferritic stainless steel powder according to any one of claims 1 to 6, wherein the content of Cr is 22.0 mass% or less.

8. The ferritic stainless steel powder according to any one of claims 1 to 7, wherein the content of Si is 1.20 mass% or less.

9. The ferritic stainless steel powder according to any one of claims 1 to 8, wherein the content of Mn is 0.60 mass% or less.

10. A mixed powder comprising:
the ferritic stainless steel powder according to any one of claims 1 to 9, and
a metal carbide powder.

11. Use of the ferritic stainless steel powder according to any one of claims 1 to 9, for laser cladding or additive manufacturing by a laser beam method.

12. Use of the ferritic stainless steel powder according to any one of claims 1 to 9, or the mixed powder according to claim 10, as a powder raw material for producing parts.

13. The use according to claim 12, wherein the part is a heat exchanger.

14. The use according to claim 12, wherein the part is a boiler tube.

15. The use according to claim 12, wherein the part is tableware.
